# FASCICULE DE BREVET EUROPEEN

(11) **EP 4 445 103 B1**
(45) Date de publication et mention de la délivrance du brevet: **17.06.2026**
(21) Numéro de dépôt: 22835280.3
(22) Date de dépôt: 09.12.2022
(51) Int. Cl.: G01F 15/063, G01F 15/06, G01D 4/00, G06Q 50/06, G06Q 30/0283, G06Q 30/04

(54) **DETECTION D'USAGES DOMESTIQUES DE CONSOMMATION D'EAU**
ERFASSUNG VON WASSERVERBRAUCHSVORGÄNGEN IN WOHNHÄUSERN
DETECTION OF DOMESTIC WATER CONSUMPTION EVENTS

(30) Priorité: 10.12.2021 FR 2113328
(43) Date de publication de la demande: 16.10.2024
(73) Titulaire: SUEZ International, 92800 Puteaux (FR)
(72) Inventeur: HAEFFNER, Hugues, 92100 Boulogne Billancourt (FR); DJAFRI, Hilal, 95800 Cergy (FR)
(74) Mandataire: Lavoix
(86) Numéro de dépôt international: PCT/EP2022/085096
(87) Numéro de publication internationale: WO 2023/105014

(56) Documents cités:
- WO-A1-2017/103069
- US-A1- 2004 199 477
- US-A1- 2014 109 654
- US-A1- 2014 245 208
- US-A1- 2020 141 775
- VASAK MARIO ET AL: "Water Use Disaggregation Based on Classification of Feature Vectors Extracted from Smart Meter Data", PROCEDIA ENGINEERING, vol. 119, 1 September 2015 (2015-09-01), pages 1381 - 1390, XP029263471, ISSN: 1877-7058, DOI: 10.1016/J.PROENG.2015.08.992

## Description

### Domaine de l'invention

La présente invention concerne la distribution de l'eau. La présente invention concerne plus particulièrement la classification des usages domestiques de l'eau dans des domiciles.

### Etat de l'art précédent

La préservation des ressources en eau, et la limitation de la consommation d'eau sont des problématiques majeures, tant du point de vue économique qu'écologique.

Un moyen de parvenir à la limitation de la consommation d'eau consiste à classifier les usages de l'eau, afin de quantifier les consommations respectives des différents usages. Ceci permet à la fois de supprimer les usages « indésirables » tels que les fuites et micro-fuites, et d'identifier les usages les plus consommateurs, pour permettre aux usagers de focaliser leurs efforts de réduction de la consommation d'eau sur les usages les plus importants.

Par exemple, une connaissance fine des usages domestiques de consommation d'eau permet de fournir à l'usager des informations telles que la présence de fuites, ou une consommation particulièrement importante sur un usage donné, par exemple des douches particulièrement longues.

Historiquement, une telle détection des usages était impossible, car les consommations étaient relevées sur une période d'au minimum plusieurs mois par la relève manuelle des compteurs, ce qui par nature ne permettait pas d'identifier les différents usages.

L'émergence de compteurs de télé-relève permet d'envisager de nouvelles applications pour la détection des usages, puisque, dans le cadre de compteurs de télé-relève, les informations de consommation peuvent être envoyées au gestionnaire de réseau avec une granularité beaucoup plus fine, par exemple plusieurs fois par jour.

Cependant, l'utilisation de compteurs de télé-relève n'est pas suffisante pour détecter la nature des usages domestiques de l'eau, et ce pour plusieurs raisons.

En premier lieu, les compteurs d'eau fonctionnent généralement par l'émission d'impulsions temporelles représentant la consommation d'un volume donné d'eau, typiquement 1 litre. Il n'existe à l'heure actuelle pas de méthode efficace permettant de classifier des usages de l'eau à partir de ces impulsions.

De plus, la transmission des trames de télé-relèves se heurte à certaines limites en fonction des contextes.

En premier lieu, le volume de données transmises peut dans certains cas être limité, ce qui ne permet pas à un compteur d'envoyer des trames contenant l'ensemble des impulsions à un serveur.

Des limites peuvent également se poser quant à la confidentialité des données. Pour des raisons règlementaires, des données extrêmement fines concernant la consommation des utilisateurs ne peuvent pas toujours être envoyées. Les consommations peuvent par exemple être envoyées par tranches d'une ou plusieurs heures, voire d'une journée.

Pour toutes ces raisons, il n'est souvent pas possible pour un compteur d'eau télé-relevé d'envoyer l'ensemble des impulsions à un serveur. Il est donc désirable de pouvoir classifier les usages localement sur le compteur, et n'envoyer au gestionnaire de réseau que la répartition des consommations par usage.

Il y a donc besoin d'une méthode de classification des usages domestiques de consommation d'eau, à partir d'impulsions d'un compteur d'eau.

Il y a également besoin d'une méthode de classification des usages domestiques de consommation d'eau pouvant être implémentée localement sur le compteur.

Par ailleurs, le document VASAK MARIO et al.: "Water Use Disaggregation Based on Classification of Feature Vectors Extracted from Smart Meter Data", PROCEDIA ENGINEERING, vol. 119, 1 septembre 2015 (2015-09-01), pages 1381-1390, divulgue la classification des usages de la consommation d'eau non seulement à partir du volume d'eau consommé, mais également à partir d'autres mesures, comme la durée, le débit, l'instant de la journée, etc.

On connait également les documents US 2004/199477 A1, US 2014/109654 A1 et US 2020/141775 A1 qui divulguent des compteurs d'eau intelligents. Le document US 2004/199477 A1 décrit un système comprenant un micro-contrôleur, dans lequel les actions qu'il effectue peuvent être modifiées en fonction des exigences de chaque organisme fournissant de l'eau potable. Chaque impulsion émise par le compteur est détectée par le système; simultanément, une horloge en temps réel permet de mesurer la différence entre les impulsions afin d'obtenir le débit instantané réel, afin d'augmenter, par la suite, l'un des compteurs de volume correspondant à la consommation enregistrée dans les plages de débit instantané prédéfinies, qui, ensemble, constitueront un histogramme du débit de consommation. L'impulsion détectée augmente à son tour un compteur d'un groupe, en fonction de l'heure de la journée à laquelle elle a été générée, afin de constituer un histogramme horaire. Les informations des compteurs résidant dans la mémoire peuvent être lues électroniquement par des moyens filaires ou sans fil.

### Résumé de l'invention

A cet effet, l'invention a pour objet une méthode de classification d'usages de l'eau d'au moins un domicile (300) mise en œuvre par un compteur de consommation d'eau intelligent, un produit programme d'ordinateur et un compteur de consommation d'eau intelligent selon les revendications annexées.

La méthode permet donc, à partir des seules impulsions émises par un compteur d'eau, de déterminer l'usage associé. Elle présente à ce titre plusieurs avantages.

En premier lieu, la connaissance des usages et des volumes associés permet de mieux connaître, et donc de maîtriser la consommation d'eau; elle permet par exemple de détecter des usages indésirables et de connaître les répartitions des consommations d'eau par type d'usage, ce qui permet de réaliser des économies de consommation.

La méthode selon l'invention présente également l'avantage de ne pas nécessiter de phase d'entraînement pour la classification des usages.

La méthode selon l'invention nécessite peu de ressources de calcul, et peut s'exécuter sur un dispositif de comptage. Ceci permet de ne transmettre que des données récapitulatives de la consommation. Ceci permet à la fois de limiter la quantité de données à transmettre, et de préserver la confidentialité des usagers, en ne transmettant pas l'intégralité de leurs données de consommation.

La méthode selon l'invention peut donc être déployée facilement, y compris sur des compteurs de télé-relève disposant de capacités de calcul et d'une bande passante limitée.

Avantageusement, ledit seuil prédéfini est compris entre 40 et 180 secondes.

Ces seuils sont particulièrement adaptés pour séparer les usages successifs. En effet, un seuil de 40 secondes permet de s'assurer qu'un usage à faible débit, comme un filet d'eau, aura généré une nouvelle impulsion, alors qu'un seuil de 180 secondes permettra de s'assurer que des impulsions d'usages comportant des pauses sont bien agrégées en un même usage.

Avantageusement, ledit seuil prédéfini est compris entre 90 et 180 secondes.

Cette plage correspond généralement au temps maximal passé à se savonner pendant une douche, puis à générer une nouvelle impulsion. **Il** permet donc de d'agréger l'ensemble des impulsions d'une douche en un même usage, tout en permettant au maximum de séparer les usages successifs.

Avantageusement, le volume prédéfini d'eau est compris entre 0,1 et 3L.

Ces valeurs permettent une bonne granularité dans l'émission d'impulsions : elles sont suffisamment faibles d'émettre des impulsions régulièrement lors d'un usage, et donc de grouper correctement les impulsions au sein d'un même usage, mais également suffisamment importantes pour éviter l'émission intempestive d'impulsions.

Avantageusement, le volume prédéfini d'eau est égal à 1 L.

Cette valeur permet une bonne granularité dans l'émission d'impulsions, pour les raisons évoquées ci-dessus. De plus, il s'agit de la valeur par défaut de nombreux compteurs d'eaux. L'utilisation de cette valeur permet donc de s'adapter à la grande majorité des compteurs actuellement déployés.

Avantageusement, chaque type d'usage parmi un ensemble de types d'usages est associé à un intervalle de volumes, les intervalles de volumes associées aux différents types d'usages ne se recoupant pas ; ladite classification consiste à classifier l'usage en un type d'usage dudit ensemble associé à un intervalle de volumes comprenant ledit volume d'eau consommé durant l'usage.

Ceci permet une classification simple et efficace des usages en un type d'usage

Avantageusement, la méthode comprend une étape ultérieure de calcul des volumes cumulés de consommation d'eau respectivement associées à une pluralité de types d'usages sur une durée donnée.

Ceci permet de transmettre directement une analyse des usages, par exemple sous la forme d'un volume de consommation d'eau par usage. Ceci présente plusieurs avantages. Cela permet de réduire la quantité de données à transmettre, ce qui est avantageux si le dispositif de comptage communique par une liaison radio bas débit, ce qui est souvent le cas des compteurs d'eau de télé-relève. Ceci permet également de préserver la confidentialité des données des usagers, puisque le détail des consommations n'est pas envoyé.

Ceci permet à l'usager ou l'opérateur du réseau d'analyser les contributions respectives des différents usages, et donc d'adapter sa consommation d'eau en conséquence.

Ceci permet également d'identifier la présence d'usages indésirables.

Avantageusement, la méthode comprend une étape de présentation d'une représentation graphique synthétique représentant les volumes cumulés de consommation d'eau respectivement associées à la pluralité de types d'usages sur la durée donnée à un usager habitant l'au moins un domicile ou un opérateur du réseau de distribution d'eau auquel ladite canalisation appartient.

Une telle représentation présente l'avantage de fournir une vue synthétique et immédiate des consommations.

Avantageusement, les volumes cumulés sont comparés à des volumes cumulés de consommation de référence pour la durée donnée.

Ceci permet d'identifier un volume cumulé de consommation excessif d'un type d'usage donnée, par rapport au volume de consommation attendu, et donc d'affiner l'identification de consommations excessives sur un type d'usage donné.

Avantageusement, la méthode comprend, si le nombre d'occurrences ou le volume cumulé de consommation d'un type d'usage donné pendant une durée donnée est supérieur à un deuxième seuil, la détection automatique d'un usage indésirable.

Ceci permet de détecter et corriger des usages indésirables générateurs de consommations d'eau notables.

D'autres caractéristiques, détails et avantages de l'invention ressortiront à la lecture de la description faite en référence aux dessins annexés donnés à titre d'exemple et qui représentent, respectivement :
La figure 1 un exemple de système dans lequel l'invention peut être implémentée ;
La figure 2a un premier exemple de système selon un ensemble de modes de réalisation de l'invention ;
La figure 2b un deuxième exemple de système selon un ensemble de modes de réalisation non couverts par le texte des revendications ;
La figure 3 un exemple de méthode mise en œuvre par ordinateur selon un ensemble de modes de mise en œuvre de l'invention.

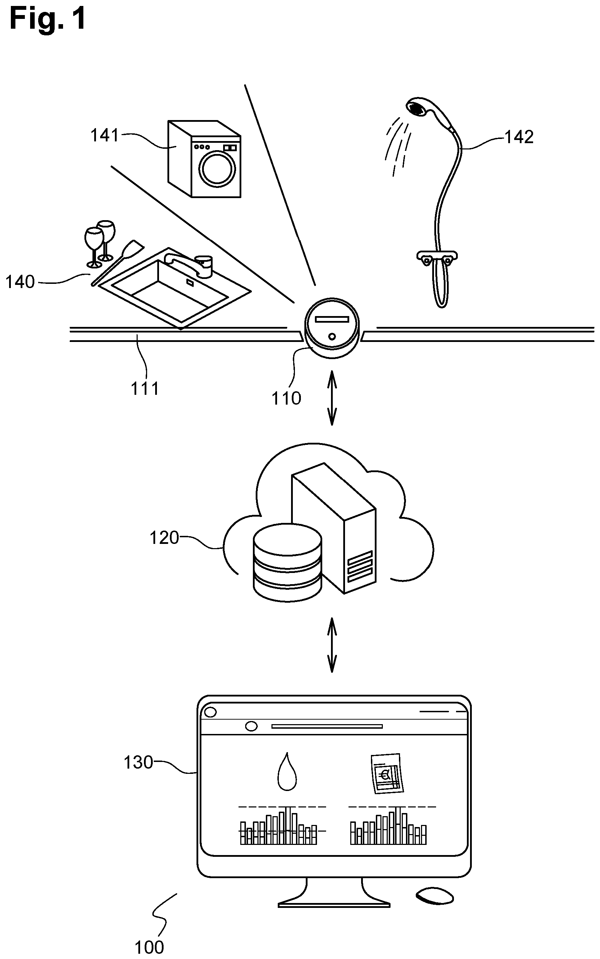

La figure 1 représente un exemple de système dans lequel l'invention peut être implémentée.

Le système 100 comprend un compteur de consommation d'eau 110 placé sur une canalisation d'arrivée d'eau 111 desservant au moins un domicile. On entend par domicile un lieu d'habitation. Un domicile peut donc par exemple être un appartement, une maison, un studio, un chalet ... Selon différents modes de réalisation de l'invention, l'arrivée d'eau 111 peut être une arrivée d'eau individuelle desservant un unique domicile, ou une arrivée d'eau collective desservant un ensemble de domiciles, par exemple une arrivée d'eau d'un immeuble.

Le compteur 110 est configuré pour mesurer le volume d'eau transitant par la canalisation l'arrivée d'eau 111, c'est-à-dire le volume d'eau consommée par le ou les domiciles.

A cet effet, le compteur 110 est configuré pour émettre des impulsions temporelles successives, chaque impulsion représentant la consommation d'un volume prédéfini d'eau à un temps d'émission.

Ainsi, le compteur émet une impulsion chaque fois qu'un volume d'eau égal au volume prédéfini a transité par la canalisation d'arrivée d'eau 111. Autrement dit, une impulsion est émise dès lors qu'un volume cumulé égal au volume prédéfini a transité par la canalisation depuis la dernière impulsion émise. Par exemple, si en un temps donné un volume d'eau égale au double du volume prédéfini transite par la canalisation, deux impulsions seront émises pendant ce temps donné.

Chaque impulsion est associée à un temps d'émission, ce qui permet de connaître avec exactitude le moment où l'impulsion a été émise. Ce temps d'émission peut être représenté de différentes manières, telles que par exemple une date et une heure, un temps écoulé depuis un temps d'initialisation du système, ou encore un temps écoulé depuis l'impulsion précédente.

Selon différents modes de réalisation de l'invention, le compteur de consommation d'eau peut être basé sur différents principes. Il peut par exemple être basé sur un débitmètre électromagnétique, ou un capteur de débit sur lequel on effectue une intégration des débits jusqu'à ce que le volume associé à une impulsion soit atteint.

Selon différents modes de réalisation de l'invention, le volume prédéfini peut prendre différentes valeurs. Par exemple, le volume prédéfini peut être compris entre 0,1 et 3L, et peut être égal à 1L.

L'eau transitant par la canalisation correspond aux différentes consommations du ou des domiciles desservis par la canalisation, et peut donc être consommée pour différents usages domestiques, tels que la vaisselle manuelle 140, l'utilisation d'un lave-linge 141, ou encore une douche 142.

L'un des objectifs de l'invention est de quantifier ces différents usages. Ces usages sont donnés à titre d'exemple uniquement, et l'invention peut être utilisée pour classifier et quantifier tout type d'usage domestique de l'eau.

Un usage domestique de l'eau est par exemple défini par l'Article R214-5 du code de l'environnement de la manière suivante : « *Constituent un usage domestique de l'eau, au sens de l'article L. 214-2, les prélèvements et les rejets destinés exclusivement à la satisfaction des besoins des personnes physiques propriétaires ou locataires des installations et de ceux des personnes résidant habituellement sous leur toit, dans les limites des quantités d'eau nécessaires à l'alimentation humaine, aux soins d'hygiène, au lavage et aux productions végétales ou animales réservées* à *la consommation familiale de ces personnes.* ». Les usages domestiques peuvent donc correspondre à un large panel d'activités utilisant l'eau au sein d'un domicile. Des usages « indésirables », tels que des microfuites, peuvent également être considérés dans le cas de la présente invention.

Afin de détecter ces usages, les impulsions peuvent être traitées pour détecter les types d'usages et les volumes associés.

Le compteur 110 peut être un compteur communiquant de télé-relève apte à communiquer avec au moins un serveur 120 (appelé « le serveur » dans la suite de la description de la figure 1) pour transmettre les consommations d'eau. La communication peut se faire de différentes manières. Par exemple, des communications radio peuvent être mises en œuvre. Dans le cadre de compteurs communicants, des liaisons radio longue distance et bas débit (également désignées par l'acronyme LPWAN, signifiant en anglais « Low Power Wide Area Network », c'est-à-dire « Réseau Etendu à Basse Consommation »), car elles permettent au compteur d'envoyer des informations même s'il est peu accessible, tout en impliquant une consommation faible, qui permet au compteur 110 de fonctionner sur pile pendant une durée longue.

Le serveur peut ainsi traiter les données reçues du capteur, et communiquer ces données à un terminal utilisateur 130, par exemple en présentant les parts respectives de consommations des différents usages, ou en comparants les consommations des différents usages aux consommations de foyers semblables. Ceci permet ainsi aux usagers de mieux comprendre la structure de leur consommation d'eau, et d'économiser la ressource en focalisant leurs efforts de réduction sur les consommations les plus importantes. Le terminal utilisateur peut être de différents types. Il peut par exemple s'agir d'un ordinateur personnel, d'un Smartphone ou d'une tablette.

Selon différents modes de réalisation de l'invention, le compteur 110 est un compteur intelligent effectuant lui-même la classification des usages et l'estimation des volumes associés, et transmettant au serveur 120 uniquement les types d'usages et les volumes associés. Cette solution présente le double avantage de préserver la confidentialité du détail des consommations des usagers, et de limiter la quantité de données transmises.

Dans d'autres modes de réalisation non couverts par le texte des revendications, le compteur 110 transmet au serveur 120 l'intégralité des impulsions, et le serveur 120 effectue l'analyse. Ceci permet de réaliser l'analyse pour des capteurs qui ne sont pas configurés pour effectuer l'analyse (par exemple des capteurs d'ancienne génération), et de centraliser sur le serveur 120 l'analyse pour l'ensemble des capteurs, ce qui permet par exemple d'adapter facilement l'analyse en cas de modifications des paramètres de calcul par l'opérateur du réseau.

Le système 100 est fourni à titre d'exemple non-limitatif uniquement de système selon l'invention, et d'autres architectures sont possibles.

Par exemple, le compteur 110 peut communiquer directement avec un terminal utilisateur 130, par exemple par le biais d'une liaison wi-fi ou bluetooth. Dans ce cas, l'analyse peut être faite directement par le compteur 110, ou par le terminal utilisateur.

Le système peut également ne comprendre que le compteur 110. Dans ce cas, les résultats de l'analyse peuvent par exemple être directement affichés sur le compteur, ou conservés pour des utilisations futures.

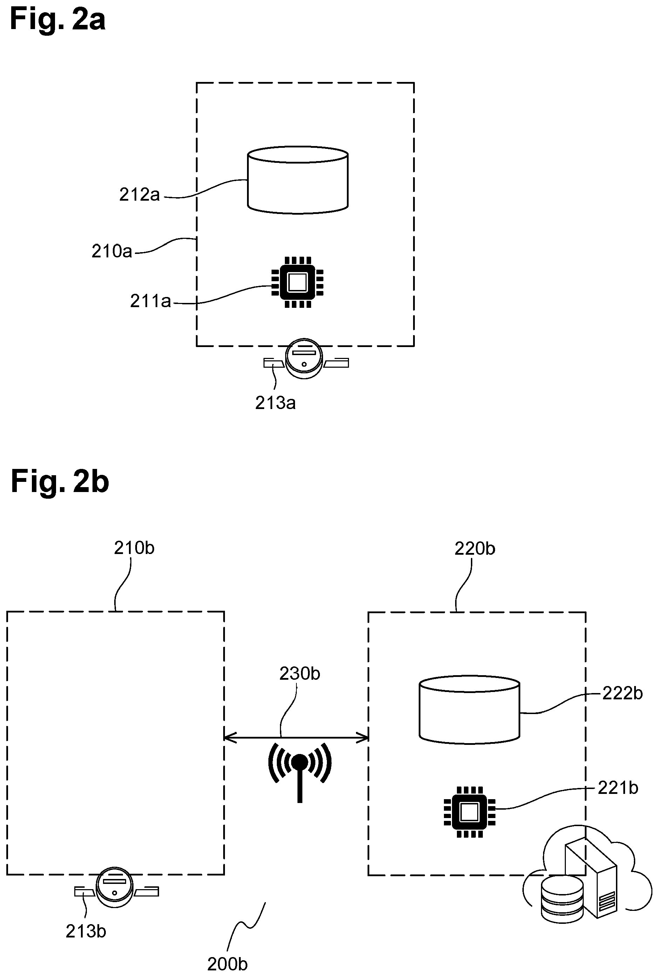

La figure 2a représente un premier exemple de système selon un ensemble de modes de réalisation de l'invention.

Le système 200a comprend un unique dispositif 210a.

Le dispositif de 210a est un dispositif de relève de consommation d'eau, comprenant un compteur 213a, qui peut être par exemple le compteur 110.

Le système 200a comprend au moins un support de stockage 212a. L'au moins un support de stockage peut consister en tout support de stockage apte à stocker des valeurs numériques, comme par exemple un disque dur, ou une mémoire flash. Dans l'exemple représenté sur la figure 2a, l'au moins un support de stockage est situé dans le dispositif 210a. Dans d'autres modes de réalisation de l'invention, l'au moins un support de stockage peut être situé à l'extérieur du dispositif 210a. Par exemple, il peut s'agir d'un disque dur partagé, ou d'une base de données distante, accessible à travers des requêtes par le dispositif informatique. L'au moins un support de stockage 212a peut notamment être utilisé pour stocker les impulsions émises par le compteur 213a en vue de leur traitement.

Le dispositif 210a comprend au moins une unité de calcul 211a. L'unité de calcul peut être tout type d'unité de calcul apte à charger des instructions et effectuer des opérations de calcul. L'au moins une unité de calcul peut par exemple être un processeur, un microprocesseur, un microcontrôleur ou un processeur de signal numérique (également appelé en anglais Digital Signal Processor ou DSP). L'au moins une unité de calcul n'est limitée à aucun type ou architecture de processeur, et peut être configuré pour exécuter des opérations en chargeant des éléments de code exécutables. Dans un ensemble de modes de réalisation de l'invention, l'au moins une unité de calcul peut être une unité de calcul unique, ou une pluralité d'unités de calcul, par exemple plusieurs processeurs, ou plusieurs cœurs de calcul d'un processeur multi-cœurs.

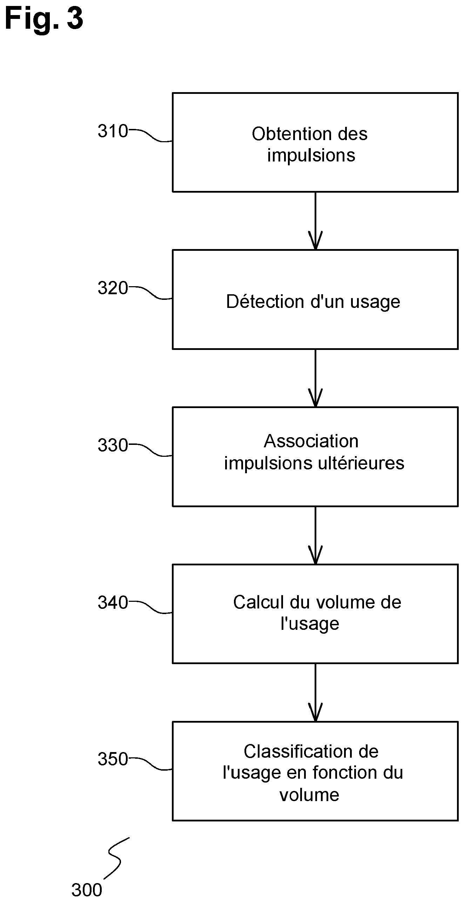

L'au moins une unité de calcul 211a est configurée pour exécuter les étapes d'une méthode selon l'invention, telles que par exemple décrites en référence à la figure 3.

L'exécution de la méthode selon l'invention selon l'invention au sein du dispositif de comptage d'eau 210a permet de transmettre directement une analyse des usages, par exemple sous la forme d'un volume de consommation d'eau par usage. Ceci présente plusieurs avantages. Cela permet de réduire la quantité de données à transmettre, ce qui est avantageux si le dispositif de comptage communique par une liaison radio bas débit, ce qui est souvent le cas des compteurs d'eau de télé-relève. Ceci permet également de préserver la confidentialité des données des usagers, puisque le détail des consommations n'est pas envoyé.

La figure 2b représente un deuxième exemple de système selon un ensemble de modes de réalisation non couverts par le texte des revendications.

Le système 200b comprend un dispositif de comptage d'eau 210b comprenant un compteur d'eau 213b, et au moins un dispositif de calcul 220b comprenant au moins une unité de calcul 221b. Le système 200b comprend également un support de stockage 222b accessible par l'au moins un dispositif de calcul 220b.

Les compteur d'eau 213b, au moins une unité de calcul 221b et support de stockage 222b sont respectivement similaires aux compteur d'eau 213a, au moins une unité de calcul 221a et support de stockage 222a.

Selon différents modes de réalisation non couverts par le texte des revendications, l'au moins un dispositif de calcul 220b peut consister en un unique dispositif de calcul, par exemple un serveur ou un terminal utilisateur. Selon d'autres modes de réalisation non couverts par le texte des revendications, une pluralité de dispositifs de calcul 220b avec une pluralité d'unités de calcul 221b sont utilisés. C'est par exemple le cas si une pluralité de serveurs est utilisée.

Les dispositifs 210b et 220b communiquent via un lien de communication 230b. Le lien de communication peut être de différents types. Il peut par exemple comprendre une ou plusieurs liaisons radio, avec par exemple des liaisons radio longue distance et bas débit, des liaisons wi-fi ou bluetooth, ou des liaisons cellulaires. Le lien de communication peut également comprendre des liaisons filaires.

Le dispositif de comptage d'eau 210b utilise le lien de communication 230b pour transmettre les impulsions à l'au moins un dispositif de calcul 220b, qui est en charge de réaliser l'analyse des impulsions.

L'au moins une unité de calcul 211b est configurée pour exécuter les étapes d'une méthode, telles que par exemple décrites en référence à la figure 3.

Différentes architectures sont possibles pour le système 200b. Par exemple :
- l'au moins un dispositif de calcul 220b peut consister en au moins serveur. Dans ce cas, le dispositif 210b peut par exemple être un compteur de télé-relève envoyant à un gestionnaire de réseau les impulsions mesurées par le capteur 213b en utilisant une liaison radio longue distance ;
- l'au moins un dispositif de calcul 220b peut être un terminal utilisateur, par exemple un ordinateur personnel, une tablette ou un smartphone. Dans ce cas, les dispositifs 210b et 220b peuvent communiquer par le biais d'un réseau local, par exemple par le biais d'une liaison bluetooth, wi-fi ou Ethernet.

L'exécution des calculs sur un dispositif de calcul autre que le dispositif de comptage 210b présente plusieurs avantages.

Ceci permet d'appliquer la méthode à des dispositifs de comptage d'eau qui ne sont pas à même de la mettre en œuvre, par exemple des dispositifs de comptage d'anciennes générations. Dans le cas où l'au moins un dispositif de calcul 220b traite les données issues de plusieurs dispositifs de comptage, ceci permet de centraliser le traitement des données. De manière plus générale, ceci permet d'adapter plus facilement la méthode de traitement des données, par exemple en cas de changement des paramètres.

Dans un ensemble de modes de réalisation non représentés sur les figures 2a et 2b, la méthode est exécutée en partie sur un dispositif de comptage et en partie sur un ou plusieurs autres dispositifs de calcul, par exemple un terminal utilisateur ou une ou plusieurs serveurs. Par exemple, le dispositif de comptage peut générer les impulsions et les traiter pour déterminer des usages et volumes associés, envoyer les usages et volumes à ou aux dispositifs de calcul, qui effectuent la classification des usages à partir des volumes.

La figure 3 représente un exemple de méthode mise en œuvre par ordinateur selon un ensemble de modes de mise en œuvre de l'invention.

La méthode 300 est une méthode mise en œuvre par ordinateur. Elle peut par exemple être exécutée par les unités de calcul 211a ou 221b. La méthode peut également être distribuée sur des unités de calculs 211a et 221b, par exemple en exécutant une partie des étapes sur un dispositif de comptage, et une autre sur un serveur. Par exemple, les étapes 310 à 340 peuvent être exécutées sur un compteur communiquant qui envoie les usages et volumes associés à un ou plusieurs serveur, qui exécutent l'étape 350 de classification.

La méthode 300 comprend une première étape 310 d'une série d'obtention d'impulsions temporelles successives d'un compteur de consommation d'eau placé sur une canalisation d'arrivée d'eau desservant au moins un domicile, chaque impulsion représentant la consommation d'un volume prédéfini d'eau à un temps d'émission.

Le compteur peut par exemple être le compteur 110, et la canalisation d'arrivée d'eau la canalisation 111. Comme expliqué en référence à la figure 1, le compteur est configuré pour émettre une impulsion dès qu'un volume d'eau égale au volume prédéfini a traversé la canalisation depuis l'impulsion précédente.

Dans un ensemble de modes de réalisation de l'invention, la méthode peut s'exécuter sur le dispositif de comptage lui-même, comme par exemple dans le cas de la figure 2a. Dans ce cas, les impulsions sont directement générées et traitées par le dispositif de comptage.

Dans un ensemble de modes de réalisation non couverts par le texte des revendications, représentés par exemple en figure 2b, la méthode est effectuée sur un dispositif de calcul distinct du dispositif de comptage. L'étape 310 réceptions des impulsions temporelles consiste alors à recevoir les impulsions du dispositif de comptage.

La méthode 300 comprend ensuite une deuxième étape 320 de détection d'un usage associé à une première impulsion ayant un temps d'émission supérieur ou égal à la somme du temps d'émission de l'impulsion immédiatement antérieure dans la série et d'un seuil prédéfini.

Dit autrement, lorsqu'une impulsion est émise à un temps suffisamment éloigné de l'émission précédente (supérieur au seuil prédéfini), on considère qu'il s'agit d'un nouvel usage : le nouvel usage est donc détecté, et l'impulsion associée à l'usage.

La méthode 300 comprend ensuite une troisième étape 330 d'association successivement à l'usage des impulsions immédiatement ultérieures dans la série, tant que la différence entre le temps d'émission de la dernière impulsion associée à l'usage, et le temps d'émission de l'impulsion immédiatement ultérieure est inférieure audit seuil prédéfini.

Dit autrement :
- Un usage démarre à la réception de la première impulsion ;
- De manière itérative, à la réception de chaque impulsion successive :
   ∘ Si la différence entre l'impulsion et l'impulsion précédente est inférieure au seuil prédéfini, l'impulsion est ajoutée à l'usage ;
   ∘ Sinon, l'usage est terminé car le délai entre deux impulsions successives est supérieur au seuil prédéfini, et l'impulsion initie un nouvel usage.

Ainsi, un usage peut comprendre, soit une impulsion unique, si elle est suffisamment éloignée (différences des temps d'émissions supérieures au seuil prédéfini) des impulsions immédiatement antérieure et ultérieure dans la série, ou une pluralité d'impulsions proches les unes des autres, la différence entre les temps d'émission de deux impulsions successives de l'usage étant alors toujours inférieur au seuil prédéfini.

Par exemple, avec un seuil prédéfini égal à 180 secondes, on peut avoir les cas suivants :
- Cas 1 :
   ∘ Première impulsion *i*₁ à un temps *t*₁ *= 0 secondes ;*
   ∘ Deuxième impulsion *i*₂ à un temps *t*₂ = 100 *secondes ;*
   ∘ Troisième impulsion *i*₃ à un temps *t*₃ = 300 *secondes ;*
   o Un premier usage est défini entre *t*₁ et *t*₂, puis un deuxième usage à partir de *t*₃, car *t*₂ - *t*₁ < 180, mais *t*₃ - *t*₂ > 180 ;
- Cas 2 :
   ∘ Première impulsion *i*₁ à un temps *t*₁ *= 0 secondes ;*
   ∘ Deuxième impulsion *i*₂ à un temps *t*₂ = 100 *secondes ;*
   ∘ Troisième impulsion *i*₃ à un temps *t*₃ = 140 *secondes ;*
   ∘ Troisième impulsion *i*₄ à un temps *t*₄ *=* 400 *secondes ;*
   ∘ Un premier usage est défini entre *t*₁ et *t*₃, puis un deuxième usage à partir de *t*₄*,* car *t*₂ - *t*₁ < 180, puis *t*₃ - *t*₂ < 110 mais *t*₄ - *t*₃ > 180 ;
- Cas 3 :
   ∘ Première impulsion *i*₁ à un temps *t*₁ *= 0 secondes ;*
   ∘ Deuxième impulsion *i*₂ à un temps *t*₂ = 200 *secondes ;*
   ∘ Un premier usage est défini au temps *t*₁, puis un deuxième usage à partir de *t*₂, car *t*₂ - *t*₁ > 180 ;

Selon différents modes de réalisation de l'invention, la notion de différence inférieure au seuil peut correspondre à une différence strictement inférieure, ou inférieure ou égale. Par exemple, si l'on considère les temps *tᵢ* et *t*_{*i*+1} de deux impulsions successives, la détection d'un nouvel usage pour avec un seuil prédéfini S peut être effectuée, selon différents modes de réalisation :
- Si la différence entre *tᵢ* et *t*_{*i*+1} est strictement inférieure à S, c'est-à-dire si *t*_{*i+*1} *- tᵢ < S* ;
- Si la différence entre *tᵢ* et *t*_{*i*+1} est inférieure ou égale à S, c'est-à-dire si *t*_{*i+*1} - *tᵢ* ≤ S.

A l'issue de l'étape 320, les impulsions sont donc regroupées au sein d'usages cohérents, correspondant par exemple à une douche, une vaisselle, etc...

Selon différents modes de réalisation de l'invention, le seuil prédéfini S peut prendre différentes valeurs.

De manière générale, ce seuil prédéfini représente la durée sans consommation détectable à partir de laquelle on considère qu'un usage est terminé. Ce seuil doit donc être choisi suffisamment faible pour ne pas agréger des usages successifs, mais aussi suffisamment élevé pour qu'un même usage ne soit pas « coupé en deux ». Par exemple, il est souhaitable que, lorsque qu'un usager se lave les mains, ou prend sa douche, les consommations d'eau avant et après le savonnage soit regroupées dans un même usage. Il est donc souhaitable que le seuil soit suffisamment élevé pour que la dernière impulsion avant le savonnage, et la première après soient regroupées dans le même usage. Au contraire, si l'usager sort de la douche, se rhabille puis lance un lave-vaisselle, il est souhaitable que le temps sans consommation durant lequel l'utilisateur s'habille soit supérieur au seuil prédéfini pour séparer les deux usages.

Par exemple, le seuil prédéfini peut être compris entre 40 et 180 secondes. Un seuil prédéfini compris entre 90 et 180 secondes est particulièrement adapté.

Ces seuils sont particulièrement adaptés pour séparer les usages successifs. En effet, un seuil supérieur ou égal à 40 secondes permet de s'assurer qu'un usage à faible débit, comme un filet d'eau, aura généré une nouvelle impulsion dans l'intervalle de 40 secondes après l'impulsion initiale, alors qu'un seuil inférieur ou égal à 180 secondes permettra de s'assurer que des impulsions d'usages comportant des pauses sont bien agrégées en un même usage.

En particulier, un seuil entre 90 et 180 secondes correspond généralement au temps maximal passé à se savonner pendant une douche, puis à refaire couler suffisamment d'eau pour générer une nouvelle impulsion. Il permet donc de d'agréger l'ensemble des impulsions d'une douche en un même usage, tout en permettant au maximum de séparer les usages successifs.

Selon différents modes de réalisation de l'invention, le volume prédéfini d'eau peut prendre différentes valeurs. Par exemple, le volume prédéfini peut être compris entre 0,1 et 3L.

Ces valeurs permettent une bonne granularité dans l'émission d'impulsions : elles sont suffisamment faibles pour émettre des impulsions régulièrement lors d'un usage, et donc de grouper correctement les impulsions au sein d'un même usage, mais également suffisamment importantes pour éviter l'émission intempestive d'impulsions rapprochés en cas de micro-fuite.

Le volume prédéfini d'eau peut en particulier être égal à 1L.

Cette valeur permet une bonne granularité dans l'émission d'impulsions, pour les raisons évoquées ci-dessus. De plus, il s'agit de la valeur par défaut de nombreux compteurs d'eau. L'utilisation de cette valeur permet donc de s'adapter à la grande majorité des compteurs actuellement déployés.

Dans un ensemble de modes de réalisation de l'invention, le seuil prédéfini peut être défini en fonction du volume prédéfini, afin de s'adapter à la fréquence attendu d'émission des impulsions.

Par exemple, un seul prédéfini compris entre 90 et 180 secondes est particulièrement adapté à un volume prédéfini d'eau est compris entre 0,1 et 3L, et plus particulièrement égal à 1L.

La méthode 300 comprend ensuite une quatrième étape 340 de calcul d'un volume d'eau consommé durant l'usage, ledit volume d'eau consommé durant l'usage étant égal au nombre d'impulsions associées à l'usage multiplié par ledit volume prédéfini.

Cette étape consiste donc à déterminer le volume d'un usage, en comptant le nombre d'impulsions émises durant l'usage.

Par exemple, en reprenant l'exemple ci-dessus avec un seuil prédéfini égal à 180 secondes, et un volume prédéfini égale à 1L, on peut avoir les cas suivants :
- Cas 1 :
   ∘ Première impulsion *i*₁ à un temps *t*₁ *= 0 secondes ;*
   ∘ Deuxième impulsion *i*₂ à un temps *t*₂ = 100 *secondes ;*
   ∘ Troisième impulsion *i*₃ à un temps *t*₃ = 300 *secondes ;*
   ∘ Un premier usage est défini entre *t*₁ et *t*₂, puis un deuxième usage à partir de *t*₃, car *t*₂ - *t*₁ < 180, mais *t*₃ - *t*₂ > 180 ;
   ∘ Deux impulsions (*i*₁ et *i*₂) ont été émises durant le premier usage, soit un volume consommé durant le premier usage égal à 2 * 1L = 2L.
- Cas 2 :
   ∘ Première impulsion *i*₁ à un temps *t*₁ *= 0 secondes ;*
   ∘ Deuxième impulsion *i*₂ à un temps *t*₂ = 100 *secondes ;*
   ∘ Troisième impulsion *i*₃ à un temps *t*₃ = 140 *secondes* ;
   ∘ Troisième impulsion *i*₄ à un temps *t*₄ *=* 400 *secondes* ;
   ∘ Un premier usage est défini entre *t*₁ et *t*₃, puis un deuxième usage à partir de *t*₄*,* car *t*₂ - *t*₁ < 180, puis *t*₃ - *t*₂ < 180 mais *t*₄ - *t*₃ > 180 ;
   ∘ Trois impulsions (*i*₁, *i*₂ et *i*₃) ont été émises durant le premier usage, soit un volume consommé durant le premier usage égal à 3 * 1L = 3L.
- Cas 3 :
   ∘ Première impulsion *i*₁ à un temps *t*₁ *= 0 secondes ;*
   ∘ Deuxième impulsion *i*₂ à un temps *t*₂ = 200 *secondes ;*
   ∘ Un premier usage est défini au temps *t*₁, puis un deuxième usage à partir de *t*₂, car *t*₂ - *t*₁ > 180 ;
   ∘ Une unique impulsion (*i*₁) a été émise durant le premier usage, soit un volume consommé durant le premier usage égal à 1 * 1L = 1L.

A l'issue de l'étape 340, il est donc possible de connaître le volume d'eau consommé durant chaque usage.

La méthode 300 comprend ensuite une cinquième étape 350 de classification de l'usage en un type d'usage, en fonction dudit volume d'eau consommé durant l'usage.

Cette étape consiste à déterminer un type d'usage (par exemple, si l'usage correspond à une douche, un lave-vaisselle, un lave-linge, etc.).

En effet, la demanderesse a remarqué que chaque type d'usage correspondait généralement à un volume d'eau consommé caractéristique. Par exemple, un lave-vaisselle consomme en général entre 2 et 3 litres d'eau, une chasse d'eau suivie d'un lavage de mains entre 4 et 12 litres, alors qu'une douche consomme en général entre 15 et 100 litres d'eau. La connaissance du volume associé à l'usage permet donc de déterminer quel était le type d'usage concerné et à défaut de définir des classes d'usage intéressantes pour l'usager permettant de séparer les principaux usages domestiques, tels que les chasses d'eau, le lavage du linge et les douches et bains

La méthode permet donc, à partir des seules impulsions émises par un compteur d'eau, de déterminer l'usage associé. Elle présente à ce titre plusieurs avantages.

En premier lieu, la connaissance des usages et des volumes associés permet de mieux connaître, et donc de maîtriser la consommation d'eau; elle permet par exemple de détecter des usages indésirables et de connaître les répartitions des consommations d'eau par type d'usage, ce qui permet de réaliser des économies de consommation.

La méthode selon l'invention présente également l'avantage de ne pas nécessiter de phase d'entraînement pour la classification des usages.

La méthode selon l'invention nécessite peu de ressources de calcul, et peut s'exécuter sur un dispositif de comptage. Ceci permet de ne transmettre que des données récapitulatives de la consommation. Ceci permet à la fois de limiter la quantité de données à transmettre, et de préserver la confidentialité des usagers, en ne transmettant pas l'intégralité de leurs données de consommation.

La méthode selon l'invention peut donc être déployée facilement, y compris sur des compteurs de télé-relève disposant de capacités de calcul et d'une bande passante limitée.

Dans un ensemble de modes de réalisation,
- chaque type d'usage parmi un ensemble de types d'usages est associé à un intervalle de volumes, les intervalles de volumes associées aux différents types d'usages ne se recoupant pas ;
- ladite classification consiste à classifier l'usage en un type d'usage dudit ensemble associé à un intervalle de volumes comprenant ledit volume d'eau consommé durant l'usage.

Dit autrement, un nombre de types d'usages est défini, chacun associé à un intervalle de volumes. Lorsque le volume d'eau consommé pendant l'usage est compris dans un intervalle associé à un type d'usage, l'usage est classifié dans ledit type.

Ceci permet une classification simple et efficace des usages en un type d'usage.

Dans un ensemble de modes de réalisation de l'invention, la classification se base sur les usages suivants, par ordre croissant de volume : micro-fuites et usages ponctuels ; usages ponctuel maîtrisé tel qu'un lave-vaisselle ; chasses d'eau ; usages intermédiaires tels qu'un cycle de lave-linge ; douche économe ; douche moyenne ; douche importante ; bain ; usage intensif tel qu'un arrosage. Les volumes associés à chaque usage peuvent être définis par des seuils croissants.

A cet effet, la consommation associée à chaque type d'usage peut être quantifiée. Les intervalles suivants peuvent par exemple être évalués :
- La catégorie usage isolé de 1L est séparée dans tous les cas (elle comporte des micro-fuites, ainsi que des usages ponctuels de 1 litre) ;
- Un usage ponctuel supérieur à 1 litre va aller de 2 à 4 litres ;
- Une chasse d'eau va aller de 3 à 12 litres ;
- Un lave-linge va consommer de 10 à 30 litres ;
- Une douche va consommer de 15 à 150 litres ;
- un bain va consommer de 80 à 250 litres.

Certains intervalles se recoupant, des seuils peuvent être définis. Par ailleurs, certains intervalles peuvent être divisés en usages plus spécifiques. Par exemple, la classification peut se baser sur les intervalles de consommation suivants, chaque intervalle de volume d'eau consommé par un usage étant associé à un type d'usage :
- 1 litre = usage ponctuel (puisage de quelques secondes à un robinet), microfuite ;
- 2-3 litres = usages ponctuel maîtrisé, lave-vaisselle ;
- 4-10 litres: chasses d'eau, puisages plus importants (vaisselle à la main, remplissage d'un seau ... )
- 11 - 20 litres = usages intermédiaires (cycle de lave-linge, puisages importants, douches très courtes) ;
- 21 - 40 litres = douches économes. (typiquement 5 minutes à 6 litres par minute) ;
- 40 - 70 litres = douches moyennes (typiquement 6 minutes à 8 litres par minute) ;
- 70 - 150 litres = douches longues (typiquement plus de 9 minutes à 8 litres par minute), demi baignoire ;
- 150 - 250 litres = bains, usages importants.
- Plus de 250 litres = usages intensifs (arrosage, remplissage de piscine, blocage de la chasse d'eau, fuite continue).

Ces intervalles et types d'usages sont donnés à titre d'exemple non-limitatif uniquement, et d'autres intervalles/types d'usages peuvent être considérés. Par exemple, un sous-ensemble des intervalles et types d'usages ci-dessus peut être utilisé. Les bornes et intervalles considérés, ainsi que les types d'usages associés, peuvent bien sûr être différents de ceux présentés ci-dessus. Par exemple, des seuils différents peuvent être choisis : par exemple, la séparation entre un usage ponctuel maîtrisé et une chasse d'eau pourrait être définie entre 2 et 3 litres plutôt qu'entre 3 et 4 ; la séparation entre une chasse d'eau et un lave-linge pourrait être définie entre 11 et 12 litres, ou entre 12 et 13 litres, plutôt qu'entre 10 et 11 ; le seuil de séparation entre un lave-linge et une douche pourrait être placé entre 15 et 25 litres, etc.

Dans l'exemple ci-dessus, les intervalles couvrent l'ensemble des consommations possibles. Ainsi, quel que soit le volume d'eau consommé, un type d'usage correspondant pourra être identifié. Dans d'autres modes de réalisation, les intervalles associés aux usages peuvent ne couvrir qu'une partie des volumes de consommation possibles. Dans le cas où un volume d'eau consommé pendant un usage ne serait compris dans aucun de ces intervalles, l'usage peut être classifié dans un type d'usage inconnu.

Dans le cas où des données (i.e, en fonction des modes de réalisation, les données transmises peuvent être par exemple les impulsions obtenues à l'étape 310, les usages et volumes à l'issue de l'étape 340, ou les usages classifiés, associés le cas échéant à leurs volumes à l'issue de l'étape 350) sont transmises d'un dispositif de comptage à un autre dispositif de calcul, la fréquence d'envoi des données peut être modulée. Par exemple, les données peuvent être transmises chaque heure, chaque jour, chaque semaine, etc.

Une fois les usages classifiés, leur connaissance peut être utilisée de diverses manières.

Dans un ensemble de modes de réalisation de l'invention, la méthode 300 comprend une étape ultérieure de calcul des volumes cumulés de consommation d'eau respectivement associées à une pluralité de types d'usages sur une durée donnée.

Ceci consiste à sommer, sur une durée donnée (par exemple une semaine, un mois, une année...) les volumes consommés pour chaque type d'usage. A l'issue de cette étape, les volumes respectifs associés à chaque usage sont donc connus, et peuvent être pris en compte par un usager ou un opérateur du réseau de distribution d'eau.

Ceci permet à l'usager ou l'opérateur du réseau d'analyser les contributions respectives des différents usages, et donc d'adapter la consommation d'eau en conséquence.

Par exemple, si l'analyse des volumes cumulés met en évidence une consommation excessive d'eau pour les usages liés aux douches, l'usager peut adapter sa consommation pour réduire le temps passé sous la douche ou adopter un équipement plus économe.

Ceci permet également d'identifier la présence d'usages indésirables.

Par exemple, la présence d'une consommation cumulée significative associée à l'usage « microfuite » permet de détecter la présence d'une fuite, et d'engager les actions correctives nécessaires avec un seuil de détection très sensible. De même, la présence d'usages relatifs aux douches longues permet d'informer l'utilisateur que son temps passé sous la douche est excessif ou que son équipement doit être adapté.

En pratique, l'analyse peut s'effectuer de différentes manières.

Dans un ensemble de modes de réalisation de l'invention, la méthode 300 comprend ensuite une étape de présentation d'une représentation graphique synthétique représentant les volumes cumulés de consommation d'eau respectivement associées à la pluralité de types d'usages sur la durée donnée à un usager habitant l'au moins un domicile ou un opérateur du réseau de distribution d'eau auquel ladite canalisation appartient.

De manière générale, les usages peuvent ainsi être quantifiés et présentés de manière synthétique à un usager et/ou un opérateur réseau. Par exemple, les consommations cumulées relatives des différents types d'usages sur une durée donnée (semaine, mois, année...) peuvent être présentées à un usager (habitant d'un ou des foyers concernés par l'arrivée d'eau) ou un opérateur du réseau de distribution d'eau desservant l'au moins un foyer, par exemple sous une forme graphique telle qu'un diagramme en bâtons ou un camembert. La visualisation peut se faire sur tout type de terminal utilisateur, par exemple un ordinateur personnel, smartphone ou tablette tactile, sur un navigateur web ou une application.

Une telle représentation présente l'avantage de fournir une vue synthétique et immédiate des consommations.

Dans le cas où la représentation est montrée à l'usager, celui-ci peut directement entreprendre les mesures d'adaptation de sa consommation d'eau.

Dans le cas où la représentation est montrée à l'opérateur, celui-ci peut l'analyser, et contacter l'usager pour l'informer des actions de réduction de consommation les plus opportunes.

Dans un ensemble de modes de réalisation de l'invention, les volumes cumulés sont comparés à des volumes cumulés de consommation de référence pour la durée donnée.

Ceci permet d'identifier un volume cumulé de consommation excessif d'un type d'usage donnée, par rapport au volume de consommation attendu, et donc d'affiner l'identification de consommations excessives sur un type d'usage donné.

Les volumes cumulés de consommation de référence pour la durée donnée peuvent correspondre à différents volumes auquel il est intéressant de comparer les consommations. Par exemple, il peut s'agir :
- de volumes de consommations cumulées passés des mêmes usagers sur une même durée. Par exemple, les consommations cumulées d'un domicile sur un mois donné peuvent être comparés aux consommations cumulées du même mois de l'année précédente, ce qui permet de détecter une éventuelle augmentation de la consommation sur un type d'usage ;
- de volumes de consommations cumulées moyens ou médians de foyers équivalents. Par exemple, des volumes de consommations cumulées moyens ou médians peuvent être établis sur une région donnée pour des foyers semblables (par exemple, des studios habités par une personne seule). Ceci permet de détecter une consommation excessive sur un type d'usage, par rapport à une consommation attendue en fonction des caractéristiques du foyer desservi ;
- etc.

En pratique, la comparaison peut s'effectuer de différentes manières. Par exemple, les consommations cumulées peuvent être comparées numériquement aux consommations cumulées de référence (affectées le cas échéant d'un facteur de marge), et une alerte peut être levée si la consommation cumulée est supérieure à la consommation cumulée de référence. Si les consommations cumulées sont représentées graphiquement, les consommations de références peuvent être indiquées sur la représentation graphique, ce qui permet à l'usager ou à l'opérateur du réseau de comparer instantanément, et de visualiser l'ampleur d'une consommation excessive.

Dans un ensemble de modes de réalisation de l'invention, la méthode 300 comprend, si le nombre d'occurrences ou le volume cumulé de consommation d'un type d'usage donné pendant une durée donnée est supérieur à un seuil, la détection automatique d'un usage indésirable.

Un usage indésirable est un usage qu'il convient de limiter ou de supprimer. Par exemple, les fuites, microfuites, ou douches longues sont des usages indésirables.

Ceci permet de détecter et corriger des usages indésirables générateurs de consommations d'eau notables.

En pratique, l'usage indésirable peut être détecté si, pendant une durée donnée :
- le nombre d'occurrences associées au type d'usage est supérieur à un seuil. Par exemple, une microfuite peut être détectée si un nombre d'occurrence de l'usage « microfuite » (détecté en général pour les usages ne comprenant qu'une seule impulsion, par exemple correspondant à une consommation d'un litre d'eau) supérieur à 20 sur une journée ;
- le volume cumulé de consommation d'un usage considéré comme indésirable sur une durée donnée est supérieur à un seuil. Par exemple, un volume associé à des douches longues supérieur à 300 litres sur une semaine peut entraîner la génération d'une alerte.

La méthode permet ainsi de détecter des usages indésirables par la seule analyse des impulsions émises par un compteur d'eau.

Les exemples ci-dessus démontrent la capacité de l'invention à détecter et classifier les usages domestiques de l'eau. Ils ne sont cependant donnés qu'à titre d'exemple et ne limitent en aucun cas la portée de l'invention, définie dans les revendications ci-dessous.

## Revendications

1. Méthode de classification d'usages de l'eau d'au moins un domicile (300) mise en œuvre par un compteur de consommation d'eau intelligent comprenant :
- l'obtention (310) d'une série d'impulsions temporelles successives du compteur de consommation d'eau intelligent (110) placé sur une canalisation d'arrivée d'eau (111) desservant l'au moins un domicile, chaque impulsion représentant la consommation d'un volume prédéfini d'eau à un temps d'émission ;
- la détection (320) d'un usage associé à une première impulsion ayant un temps d'émission supérieur ou égal à la somme du temps d'émission de l'impulsion immédiatement antérieure dans la série et d'un seuil prédéfini ;
- l'association (330) successivement à l'usage des impulsions immédiatement ultérieures dans la série, tant que la différence entre le temps d'émission de la dernière impulsion associée à l'usage, et le temps d'émission de l'impulsion immédiatement ultérieure est inférieure audit seuil prédéfini ;
- le calcul (340) d'un volume d'eau consommé durant l'usage, ledit volume d'eau consommé durant l'usage étant égal au nombre d'impulsions associées à l'usage multiplié par ledit volume prédéfini ;
- la classification (350) de l'usage en un type d'usage, en fonction dudit volume d'eau consommé durant l'usage, chaque type d'usage parmi un ensemble de types d'usages étant associé à un intervalle de volumes, les intervalles de volumes associées aux différents types d'usages ne se recoupant pas, et ladite classification consistant à classifier l'usage en un type d'usage dudit ensemble lorsque le volume d'eau consommé durant l'usage est compris dans l'intervalle de volumes associé audit type d'usage ; et,
- transmission à un serveur (120) uniquement les types d'usages et les volumes d'eau associés.

2. Méthode selon la revendication 1, dans laquelle ledit seuil prédéfini est compris entre 40 et 180 secondes.

3. Méthode selon la revendication 2, dans laquelle ledit seuil prédéfini est compris entre 90 et 180 secondes.

4. Méthode selon l'une quelconque des revendications précédentes, dans laquelle le volume prédéfini d'eau est compris entre 0,1 et 3L.

5. Méthode selon la revendication 4, dans laquelle le volume prédéfini d'eau est égal à 1L.

6. Méthode selon l'une quelconque des revendications précédentes, comprenant une étape ultérieure de calcul des volumes cumulés de consommation d'eau respectivement associées à une pluralité de types d'usages sur une durée donnée.

7. Méthode selon la revendication 6, comprenant une étape de présentation d'une représentation graphique synthétique représentant les volumes cumulés de consommation d'eau respectivement associées à la pluralité de types d'usages sur la durée donnée à un usager habitant l'au moins un domicile ou un opérateur du réseau de distribution d'eau auquel ladite canalisation appartient.

8. Méthode selon l'une des revendications 6 ou 7, dans laquelle les volumes cumulés sont comparés à des volumes cumulés de consommation de référence pour la durée donnée.

9. Méthode selon l'une quelconque des revendications précédentes comprenant , si le nombre d'occurrences ou le volume cumulé de consommation d'un type d'usage donné pendant une durée donnée est supérieur à un deuxième seuil, la détection automatique d'un usage indésirable.

10. Produit programme d'ordinateur comprenant des instructions de code de programme pour l'exécution des étapes de la méthode selon l'une des revendications 1 à 9 lorsque ledit programme est exécuté sur un compteur de consommation d'eau intelligent.

11. Compteur de consommation d'eau intelligent (100, 200a, 200b) comprenant :
- un compteur de consommation d'eau (110, 213a, 213b) placé sur une arrivée d'eau (111) desservant l'au moins un domicile configuré pour émettre des impulsions temporelles successives, chaque impulsion représentant la consommation d'un volume prédéfini d'eau à un temps d'émission ; et,
- au moins une unité de calcul (211a, 221b) configurée pour exécuter les étapes de la méthode selon l'une des revendications 1 à 9**.**

## Patentansprüche

1. Verfahren zur Klassifizierung von Wassernutzungen in mindestens einem Haushalt (300), implementiert von einem intelligenten Wasserzähler, umfassend:
- Erlangen (310) einer Reihe von aufeinanderfolgenden zeitlichen Impulsen von dem intelligenten Wasserzähler (110), der an einem Wassereinlassrohr (111) platziert ist, das die mindestens eine Wohnung bedient, wobei jeder Impuls den Verbrauch eines vordefinierten Wasservolumens zu einer Emissionszeit darstellt;
- Erkennen (320) einer mit einem ersten Impuls assoziierten Nutzung, dessen Emissionszeit größer als oder gleich wie die Summe aus der Emissionszeit des unmittelbar vorherigen Impulses in der Reihe und einem vordefinierten Schwellenwert ist;
- Assoziieren (330) von unmittelbar nachfolgenden Impulsen in der Reihe nacheinander zur Nutzung, solange die Differenz zwischen der Emissionszeit des letzten mit der Verwendung verbundenen Impulses und der Emissionszeit des unmittelbar nachfolgenden Impulses kleiner ist als der vordefinierte Schwellenwert;
- Berechnen (340) des während der Nutzung verbrauchten Wasservolumens, wobei das während der Nutzung verbrauchte Wasservolumen gleich wie die Anzahl der mit der Nutzung assoziierten Impulse multipliziert mit dem vordefinierten Volumen ist;
- Klassifizieren (350) der Nutzung in einen Nutzungstyp, basierend auf dem während der Nutzung verbrauchten Wasservolumen, wobei jeder Nutzungstyp aus einer Menge von Nutzungstypen mit einem Volumenintervall assoziiert ist, die Volumenintervalle der verschiedenen Nutzungstypen sich nicht überschneiden, und wobei das Klassifizieren darin besteht, die Nutzung einem Nutzungstyp aus der Menge zuzuordnen, wenn das während der Nutzung verbrauchte Wasservolumen innerhalb des mit dem Nutzungstyp verbundenen Volumenintervalls ist; und
- Übertragen an einen Server (120) nur der Nutzungstypen und der assoziierten Wasservolumen.

2. Verfahren nach Anspruch 1, wobei der vordefinierte Schwellenwert zwischen 40 und 180 Sekunden ist.

3. Verfahren nach Anspruch 2, wobei der vordefinierte Schwellenwert zwischen 90 und 180 Sekunden ist.

4. Verfahren nach einem der vorherigen Ansprüche, wobei das vordefinierte Wasservolumen zwischen 0,1 und 3 l ist.

5. Verfahren nach Anspruch 4, wobei das vordefinierte Wasservolumen gleich 1 l ist.

6. Verfahren nach einem der vorherigen Ansprüche, umfassend einen nachfolgenden Schritt eines Berechnens der kumulierten verbrauchten Wasservolumen, die jeweils mit einer Vielzahl von Nutzungstypen über einen bestimmten Zeitraum assoziiert sind.

7. Verfahren nach Anspruch 6, umfassend einen Schritt eines Darstellens einer synthetischen grafischen Darstellung, die die kumulierten verbrauchten Wasservolumen zeigt, die jeweils mit den verschiedenen Nutzungstypen über den gegebenen Zeitraum assoziiert sind, an einen Nutzer, der in mindestens einer Wohnung wohnt, oder an einen Betreiber des Wasserverteilungsnetzes, zu dem die Leitung gehört.

8. Verfahren nach einem der Ansprüche 6 oder 7, wobei die kumulierten Volumen mit Referenzverbrauchsvolumen für die gegebene Dauer verglichen werden.

9. Verfahren nach einem der vorherigen Ansprüche, das, wenn die Anzahl der Vorkommnisse oder das kumulierte Volumen des Verbrauchs einem bestimmten Nutzungstyp innerhalb eines bestimmten Zeitraums über einem zweiten Schwellenwert ist, das automatische Erkennen einer unerwünschten Nutzung umfasst.

10. Computerprogrammprodukt, umfassend Programmcodeanweisungen zum Ausführen der Schritte des Verfahrens nach einem der Ansprüche 1 bis 9, wenn das Programm auf einem intelligenten Wasserzähler ausgeführt wird.

11. Intelligenter Wasserzähler (100, 200a, 200b), umfassend:
- einen Wasserzähler (110, 213a, 213b), der an einem Wasseranschluss (111) platziert ist und mindestens eine Wohnung versorgt, der konfiguriert ist, um aufeinanderfolgende zeitliche Impulse zu emittieren, wobei jeder Impuls den Verbrauch eines vordefinierten Wasservolumens zu einer Emissionszeit darstellt; und,
- mindestens eine Recheneinheit (211a, 221b), die konfiguriert ist, um die Schritte des Verfahrens nach einem der Ansprüche 1 bis 9 auszuführen.

## Claims

1. A method of classifying water uses of at least one home (300) implemented by an intelligent water consumption meter comprising:
- the obtention (310) of a series of successive time pulses from the intelligent water consumption meter (110) placed on a water supply pipeline (111) supplying at least one home, each pulse representing the consumption of a predefined volume of water at a transmission time;
- the detection (320) of a use associated with a first pulse having a transmission time greater than or equal to the sum of the transmission time of the immediately preceding pulse in the series and of a predefined threshold;
- the association (330), successively with the use, of the immediately subsequent pulses in the series, as long as the difference between the transmission time of the last pulse associated with the use, and the transmission time of the immediately subsequent pulse is below said predefined threshold;
- the computation (340) of a volume of water consumed during the use, said volume of water consumed during the use being equal to the number of pulses associated with the use multiplied by said predefined volume;
- the classification (350) of the use into a type of use, according to the volume of water consumed during the use, each type of use among a set of types of use being associated with a volume interval, the volume intervals associated with the different types of use do not overlap, and said classification consisting in classifying the use into a type of use of said set associated when the volume of water consumed during the use is comprised into the volume interval associated to said type of use; and,
- the transmission to a server (120) of only the type of use and the volume of water associated.

2. The method according to claim 1, wherein said predefined threshold is comprised between 40 and 180 seconds.

3. The method according to claim 2, wherein said predefined threshold is comprised between 90 and 180 seconds.

4. The method according to any of the preceding claims, wherein the predefined volume of water is comprised between 0.1 and 3l.

5. The method according to claim 4, wherein the predefined volume of water is equal to 11.

6. The method according to any of the preceding claims, comprising a further step of computing the cumulative volumes of water consumption associated with a plurality of types of uses, respectively, over a given period.

7. The method according to claim 6, comprising a step of presenting a synthetic graphical representation representing the cumulative volumes of water consumption associated with the plurality of types, respectively, of use over the given period, for a user living in the at least one home or an operator of the water distribution network to which said pipeline belongs.

8. The method according to claim 6 or claim 7, wherein the cumulative volumes are compared with cumulative volumes of reference consumption for the given period.

9. A method according to any of the preceding claims comprising, if the number of occurrences or the cumulative volume of consumption of a given type of use over a given period is greater than a second threshold, the automatic detection of an undesirable use.

10. A computer program product comprising program code instructions for executing the steps of the method according to any of claims 1 to 9 when said computer program is executed on an intelligent water consumption meter.

11. An intelligent water consumption meter (100, 200a, 200b) comprising:
- a water consumption meter (110, 213a, 213b) placed on a water supply (111) supplying the at least one home, configured to transmit successive time pulses, each pulse representing the consumption of a predefined volume of water at a transmission time; and,
- at least one computing unit (211a, 221b) configured to perform the steps of the method according to one of claims 1 to 9.
